# EUROPEAN PATENT APPLICATION

(11) **EP 1 302 702 A2**
(43) Date of publication of application: **16.04.2003**
(21) Application number: 02022585.0
(22) Date of filing: 08.10.2002
(51) Int. Cl.: F16H 61/00, F16H 61/14

(54) **Control apparatus for a drive mechanism including a continously variable transmission, and method of controlling the drive mechanism**

(30) Priority: 09.10.2001 JP 2001311900
(71) Applicant: TOYOTA JIDOSHA KABUSHIKI KAISHA, Aichi-ken 471-8571 (JP)
(72) Inventor: Iwatsuki, Kunihiro, Toyota-shi, Aichi-ken, 471-8571 (JP); Nakawaki, Yasunori, Toyota-shi, Aichi-ken, 471-8571 (JP); Hoshiya, Kazumi, Toyota-shi, Aichi-ken, 471-8571 (JP)
(74) Representative: Leson, Thomas Johannes Alois, Dipl.-Ing.

(57) **Abstract**

A control apparatus for controlling a drive mechanism including a continuously variable transmission (1) and a clutch device (3) torque capacities of which are variable and which are disposed in series with each other between a drive power source (5) and drive wheel (20), the control apparatus including a clutch-torque-capacity adjusting portion (25, S5-S10, S28-S33) for adjusting the torque capacity of the clutch device such that the clutch device is capable of transmitting an output torque of the drive power source, without a slipping action of the clutch device, and a transmission-torque-capacity adjusting portion (25, S11-S16, S34-S39) for adjusting the torque capacity of the continuously variable transmission after the torque capacity of the clutch device has been adjusted by the clutch-torque-capacity adjusting portion, such that the continuously variable transmission is operable without a slipping action thereof. Also disclosed is a method of controlling the drive mechanism to adjust the torque capacities of the clutch device and the continuously variable transmission.

## Description

### BACKGROUND OF THE INVENTION

### Field of the Invention

The present invention relates in general to a drive mechanism including a continuously variable transmission capable of continuously changing its speed ratio, which is a ratio of its output speed to its input speed. More particularly, the present invention is concerned with a control apparatus for controlling an overall torque capacity of the drive mechanism as a while, so as to prevent a slipping action of the continuously variable transmission, and a method of controlling the drive mechanism.

### Description of the Related Art

A known continuously variable transmission is arranged to transmit a torque, by utilizing a force of friction between a belt and pulleys, or a shearing force of a traction oil existing between a power roller and input and output discs. The torque capacity of the continuously variable transmission, which is a maximum amount of torque that can be transmitted through the transmission, is determined by a pressure of contact between the belt and the pulleys (namely, a tensioning pressure applied from the pulleys to the belt), or a squeezing pressure applied from the input and output discs to the power roller.

Accordingly, the torque capacity with respect to the input torque increases with an increase in the tensioning or squeezing pressure acting on a power transmitting member such as the belt or power roller through which the torque is transmitted. By adjusting the tensioning or squeezing pressure, therefore, the continuously variable transmission can be operated to control its speed ratio, without an excessive amount of slip of the belt or other power transmitting member. However, an increase of the tensioning or squeezing pressure undesirably causes a decrease in the power transmitting efficiency, and results in deterioration of the fuel economy of an automotive vehicle equipped with the drive mechanism. In this respect, it is desirable that the tensioning or squeezing pressure in the continuously variable transmission is held as low as possible to prevent an excessive amount of slip of the transmission.

In view of the above, there has been proposed a control apparatus for a drive mechanism, wherein a clutch disposed in series with the continuously variable transmission is controlled so as to slip before a slipping action of the continuously variable transmission takes place, as disclosed in JP-A-10-2390.

Described in detail, the control apparatus disclosed in the above-identified publication is arranged to determine an engaging force of the clutch disposed in series with the belt-and-pulley type continuously variable transmission and a belt tensioning force of the continuously variable transmission, in relation to each other, such that an excess force of the engaging force of the clutch is smaller than an excess force of the belt tensioning force, so that upon application of a relatively large torque to the drive mechanism, a slipping action of the clutch takes place before a slipping action of the belt of the continuously variable transmission takes place. This arrangement prevents slipping of the belt and consequent damaging of the continuously variable transmission. The control apparatus disclosed in the above-identified publication is further arranged such that the clutch engaging force and the belt tensioning force are increased while maintaining a predetermined relationship therebetween, when a slipping action of the clutch is detected, and are reduced while maintaining the predetermined relationship, when the slipping action is not detected.

In the control apparatus disclosed in the above-identified publication, the excess force of the engaging force of the clutch disposed in series with the continuously variable transmission is held smaller than that of the belt tensioning force, so that the clutch slips before the belt slips, with a result of preventing a slipping action of the belt. In the control apparatus disclosed in the above-identified publication, the clutch engaging force and the belt tensioning force are controlled in relation to each other, according to respective control commands whose values are suitably correlated with each other. However, the predetermined relationship between the clutch engaging force and the belt tensioning force may be lost due to variations in the friction coefficients of the clutch and continuously variable transmission and in the operating characteristics of hydraulically operated devices. In this event, a slipping action of the continuously variable transmission may take place prior to or concurrently with a slipping action of the clutch.

The control apparatus disclosed in the above-identified publication arranged to control the clutch engaging force and the belt tensioning force so as to maintain the predetermined relationship with each other suffers a from complicated control due to a large number of controlled elements or control parameters, giving rise to a risk of deterioration of the control accuracy or response. Further, since the belt tensioning force is determined on the basis of the clutch engaging force, slipping of the belt of the continuously variable transmission cannot be restricted or prevented, unless slipping of the clutch takes place concurrently with the slipping of the belt.

### SUMMARY OF THE INVENTION

The present invention was made in the light of the above-described background art. It is therefore a first object of the present invention to provide a control apparatus which permits efficient and accurate adjustment of toque capacities of a continuously variable transmission and a clutch device such that a slipping action of the clutch takes place prior to a slipping action of the continuously variable transmission. A second object of the invention is to provide a method of controlling a drive mechanism including the continuously variable transmission and the clutch device, which method permits efficient and accurate adjustment of the torque capacities in the manner described above.

The first object indicated above may be achieved according to a first aspect of the present invention, which provides a control apparatus operable to effect an adjustment of a torque capacity of a clutch device and an adjustment of a torque capacity of a continuously variable transmission, independently of each other, such that the torque capacity of the continuously variable transmission is adjusted after the torque capacity of the clutch device has been adjusted. Described more specifically, the first aspect of the present invention provides a control apparatus for controlling a drive mechanism including a continuously variable transmission and a clutch device torque capacities of which are variable and which are disposed in series with each other between a drive power source and drive wheel, the control apparatus comprising: a clutch-torque-capacity adjusting portion for adjusting the torque capacity of the clutch device such that the clutch device is capable of transmitting an output torque of the drive power source, without a slipping action of the clutch device; and a transmission-torque-capacity adjusting portion for adjusting the torque capacity of the continuously variable transmission after the torque capacity of the clutch device has been adjusted by the clutch-torque-capacity adjusting means, such that the continuously variable transmission is operable without a slipping action thereof.

In the control apparatus according to the first aspect of this invention, the torque capacity of the clutch device is adjusted such that the clutch device is capable of transmitting a received torque without a slipping action thereof, and the torque capacity of the continuously variable transmission is adjusted after the torque capacity of the clutch device has been adjusted, such that the continuously variable transmission is capable of transmitting a received torque without a slipping action thereof. These torque capacities of the clutch device and the continuously variable transmission are adjusted independently of each other such that the torque capacity of the continuously variable transmission is adjusted after the adjustment of the torque capacity of the clutch device, so that the overall torque capacity of the drive mechanism can be easily and efficiently adjusted to an optimum value.

In a first preferred form of the control apparatus of the invention, the transmission-torque-capacity adjusting portion is arranged to adjust the torque capacity of the continuously variable transmission such that the torque capacity of the continuously variable transmission is smaller than that of the clutch device adjusted by the clutch-torque-capacity adjusting portion. In this form of the control apparatus, a slipping action of the clutch device necessarily takes place prior to a slipping action of the continuously variable transmission. Accordingly, temporary or abrupt application of a relatively large torque to the drive mechanism, which may cause a slipping action of the clutch device, does not cause a slipping action of the continuously variable transmission, thereby protecting the continuously variable transmission against damaging or deterioration of its durability.

In a second preferred form of the control apparatus, the clutch-torque-capacity adjusting portion is operable during an operation of the drive power source to generate a given amount of torque, and clutch-torque-capacity adjusting portion includes a first portion operable to reduce the torque capacity of the clutch device until a predetermined amount of slipping of the clutch device has taken place, and a second portion operable to increase the torque capacity of the clutch device to a value which is larger by a predetermined amount than the torque capacity at which the predetermined amount of slipping has taken place.

In the second preferred form of the control apparatus described above, the torque capacity of the clutch device is reduced while the given amount of torque is generated by the drive power source. The torque capacity of the clutch device is reduced until the predetermined amount of slipping of the clutch device has taken place. Then, the torque capacity of the clutch device is increased to the value which is larger by the predetermined amount than the torque capacity at which the predetermined amount of slipping of the clutch device has taken place. Thus, the torque capacity of the clutch device is controlled to a value as small as possible but sufficient to prevent a slipping action of the clutch device. The operation of the clutch-torque-capacity adjusting portion to adjust the torque capacity of the clutch device is performed independently of the operation of the transmission-torque-capacity adjusting portion, so that the torque capacity of the clutch can be adjusted without a complicated control as required in the prior art.

In a third preferred form of the control apparatus, the clutch-torque-capacity adjusting portion includes a first portion operable to adjust the torque capacity of the clutch device to a first value at which the clutch device has a predetermined amount of slipping, and a second portion operable to increase the torque capacity of the clutch device to a second value which is larger by a predetermined amount than the first value.

In the third preferred form of the control apparatus described above, the torque capacity of the clutch device is adjusted to the first value at which the clutch device has the predetermined amount of slipping. Where the clutch device is controllable in the amount of its slipping, the adjustment of the torque capacity to the first value may be effected by utilizing a control function to control the amount of slipping of the clutch device. Then, the torque capacity of the clutch device is increased to the optimum or second value which is larger by the predetermined amount than the first value. In this case, too, the operation of the clutch-torque-capacity adjusting portion to adjust the torque capacity of the clutch device is performed independently of the operation of the transmission-torque-capacity adjusting portion, so that the torque capacity of the clutch can be adjusted without a complicated control as required in the prior art.

The control apparatus according to a fourth preferred form of the first aspect of the invention further comprises a vehicle-running-condition determining portion operable to determine a running condition of an automotive vehicle equipped with the drive mechanism. In this form of the control apparatus, the clutch-torque-capacity adjusting portion is operable to adjust the torque capacity of the clutch device when the vehicle-running-condition determining means determines that the automotive vehicle is running in a predetermined running condition.

In the fourth preferred form of the control apparatus described above, the torque capacity of the clutch device is first adjusted during a running of the vehicle in the predetermined running condition, and the torque capacity of the continuously variable transmission is then adjusted in this predetermined running condition of the vehicle. According to one advantageous arrangement of the fourth preferred form of the control apparatus, the vehicle-running-condition determining portion determines that the automotive vehicle is running in the predetermined running condition, when the automotive vehicle is running at a substantially constant speed on a substantially flat road surface. In this respect, it is noted that the vehicle is most frequently run on a substantially flat road surface at a substantially constant speed. Accordingly, the torque capacity of the clutch device is adjusted according to an amount of torque which is expected to act on the vehicle drive mechanism in an ordinary running condition of the vehicle, that is, the torque capacity of the clutch device would not be adjusted according to an amount of torque which is expected to act on the drive mechanism only infrequently. Preferably, the vehicle-running-condition determining portion is arranged to determine whether a point defined by a load acting on the drive power source and a running speed of the automotive vehicle lies within a predetermined area in which the automotive vehicle is considered to be running in a steady state.

The control apparatus according to a fifth preferred form of the first aspect of the invention further comprises an adjustment-interval detecting portion operable to determine whether a predetermined interval of adjustment of the torque capacities of the clutch device and the continuously variable transmission has been reached, and wherein the clutch-torque-capacity adjusting portion and the transmission-torque-capacity adjusting portions are operable to adjust the torque capacities of the clutch device and the continuously variable transmission, respectively, each time the adjustment-interval detecting portion has determined that the predetermined interval has been reached.

In the control apparatus according to the fifth preferred form of the invention, the torque capacities of the clutch device and the continuously variable transmission are adjusted each time the predetermined interval has been reached, for instance, each time a predetermined cumulative distance of running of the vehicle or a predetermined cumulative number of runs of the vehicle has been reached. In this respect, variations in the friction coefficients and other parameters of the clutch device and the continuously variable transmission which affect the torque transmitting characteristics of the drive mechanism occur after an operation of the drive mechanism for a given period of time. The control apparatus according to the fifth preferred form of the invention does not adjust the torque capacities at an unnecessarily short interval, or does not make an unnecessarily frequent adjustment of the torque capacities.

The second object indicated above may be achieved according to a second aspect of this invention, which provides a method of controlling a drive mechanism including a continuously variable transmission and a clutch device torque capacities of which are variable and which are disposed in series with each other between a drive power source and drive wheel, the method comprising the steps of: adjusting the torque capacity of the clutch device such that the clutch device is capable of transmitting an output torque of the drive power source, without a slipping action of the clutch device; and adjusting the torque capacity of the continuously variable transmission after the torque capacity of the clutch device has been adjusted, such that the continuously variable transmission is operable without a slipping action thereof. The present method has substantially the same advantages as the control apparatus according to the first aspect of the invention described above.

In a first preferred form of the method according to the second aspect of the invention, the step of adjusting the torque capacity of the continuously variable transmission comprises adjusting the torque capacity of the continuously variable transmission such that the torque capacity of the continuously variable transmission is smaller than that of the clutch device. This method has substantially the same advantage as the first preferred form of the control apparatus described above.

In a second preferred form of the method of the invention, the step of adjusting the torque capacity of the clutch device is effected during an operation of the drive power source to generate a given amount of torque, and comprises reducing the torque capacity of the clutch device until a predetermined amount of slipping of the clutch device has taken place, and increasing the torque capacity of the clutch device to a value which is larger by a predetermined amount than the torque capacity at which the predetermined amount of slipping has taken place. This method has substantially the same advantage as the second preferred form of the control apparatus described above.

In a third preferred form of the method of the invention, the step of adjusting the torque capacity of the clutch device comprises adjusting the torque capacity of the clutch device to a first value at which the clutch device has a predetermined amount of slipping, and increasing the torque capacity of the clutch device to a second value which is larger by a predetermined amount than the first value. The present method has substantially the same advantage as the third preferred form of the control apparatus described above.

The method according to a fourth preferred form of the second aspect of the invention further comprises a step of determining a running condition of an automotive vehicle equipped with the drive mechanism, and wherein the step of adjusting the torque capacity of the clutch device comprises adjusting the torque capacity of the clutch device when it is determined that the automotive vehicle is running in a predetermined running condition. The present method has substantially the same advantage as the fourth preferred form of the control apparatus described above.

In one advantageous arrangement of the method according to the second aspect of the invention, the step of determining the running condition of the automotive vehicle comprises determining that the automotive vehicle is running in the predetermined running condition, when the automotive vehicle is running at a substantially constant speed on a substantially flat road surface. This method has substantially the same advantage as the advantageous arrangement of the control apparatus according to the fourth preferred form of the first aspect of the invention described above.

In the above-indicted advantageous arrangement of the method, the step of determining the running condition of the automotive vehicle preferably comprises determining whether a point defined by a load acting on the drive power source and a running speed of the automotive vehicle lies within a predetermined area in which the automotive vehicle is considered to be running in a steady state.

The method according to a fifth preferred form of the second aspect of the invention further comprises a step of determining whether a predetermined interval of adjustment of the torque capacities of the clutch device and the continuously variable transmission has been reached, and wherein the steps of adjusting the torque capacities of the clutch device and the continuously variable transmission comprise adjusting the torque capacities of the clutch device and the continuously variable transmission, respectively, each time it is determined that the predetermined interval has been reached. The present method has substantially the same advantage as the fifth preferred form of the control apparatus described above.

### BRIEF DESCRIPTION OF THE DRAWINGS

The above and other objects, features, advantages, and technical and industrial significance of this invention will be better understood by reading the following detailed description of preferred embodiments of the invention, when considered in connection with the accompanying drawings, in which:
Fig. 1 is a flow chart illustrating a control operation performed by a control apparatus according to one embodiment of this invention, for a lock-up clutch and a continuously variable transmission of a vehicle drive mechanism;
Fig. 2 is a diagrammatic view showing a predetermined steady running region of a vehicle and predetermined different control regions of the lock-up clutch, which are used to control torque capacities of the lock-up clutch and the continuously variable transmission;
Fig. 3 is a flow chart illustrating a control operation performed by the control apparatus according to another embodiment of this invention; and
Fig. 4 is a view schematically showing the vehicle drive mechanism including the continuously variable transmission, and a control system including the control apparatus for the lock-up clutch and the continuously variable transmission.

### DETAILED DESCRIPTION OF PREFERRED EMBODIMENTS

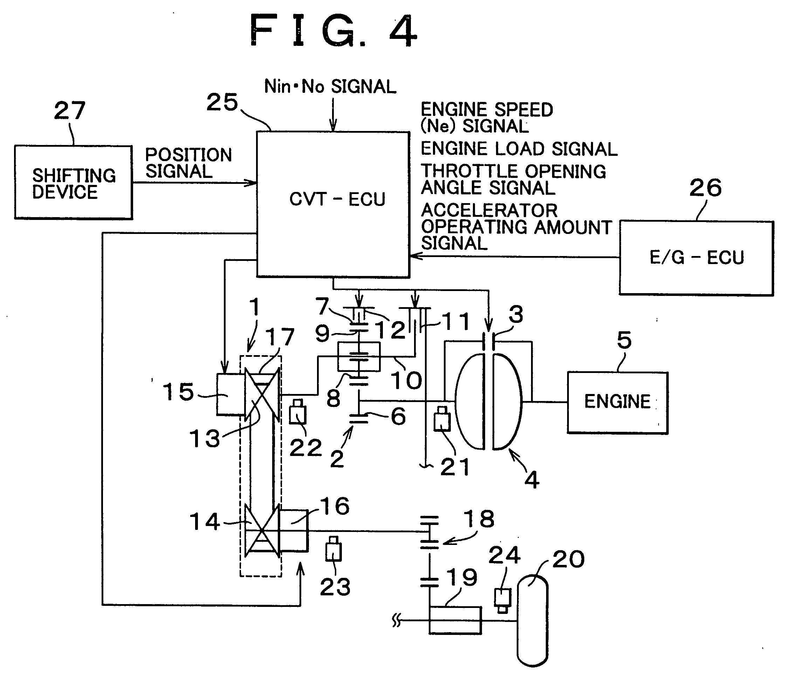

Referring first to the schematic view of Fig. 4, there will first be described a drive mechanism for an automotive vehicle, and a control system including a control apparatus according to the present invention for controlling the device mechanism. The drive mechanism includes a transmission in the form of a continuously variable transmission 1, a forward-reverse switching mechanism 2, and a fluid coupling mechanism 4 provided with a lock-up clutch 3. The continuously variable transmission 1 is connected to a drive power source 5 through the forward-reverse switching mechanism 2 and the fluid coupling mechanism 4.

The drive power source 5 is constituted by an internal combustion engine, an electric motor, or a combination of the internal combustion engine and the electric motor, for example. Namely, the drive power source 5 is a source of a drive force for running the automotive vehicle. In the following description, the drive power source 5 is referred to as "engine 5". The fluid coupling mechanism 4 is a torque converter, which includes, as well known in the art, a pump impeller rotated by the engine 5, a turbine runner disposed in series with the pump impeller, and a stator disposed between these pump impeller and turbine runner. A helical stream of a working fluid generated by the pump impeller acts on the turbine runner, so that a torque is transmitted from the pump impeller to the turbine runner, whereby the turbine runner is rotated.

In the transmission of a torque through the working fluid as described above, a slipping action inevitably arises between the pump impeller and the turbine runner, causing undesirable reduction in the power transmitting efficiency. To prevent this slipping action, the lock-up clutch 3 is provided to directly connect an input member in the form of the pump impeller and an output member in the form of the turbine runner. The lock-up clutch 3 is constructed so as to be hydraulically controlled to be selectively placed in a fully engaged state, a fully released state, and a slipping state (partially engaged state) which is a state intermediate between the fully engaged and released states. Further, the lock-up clutch 3 is constructed such that a slip speed of the lock-up clutch is controllable as needed.

The forward-reverse switching mechanism 2, which is provided because the engine 5 is operated in a predetermined one direction, is arranged to transmit a received rotary motion or torque with or without reversal of its direction. In the specific example of Fig. 4, the forward-reverse switching mechanism 2 is constituted by a double-pinion type planetary gear mechanism. Described in detail, this planetary gear mechanism includes a sun gear 6, a ring gear 7 disposed coaxially with the sun gear 6, a pinion gear 8 interposed between the sun gear 6 and the ring gear 7 and meshing with the sun gear 6, and another pinion gear 9 meshing with the pinion gear 8 and the ring gear 7. These pinion gears 8, 9 are supported by a carrier 10 such that each pinion gear 8, 9 is rotatable about its axis and such that the pinion gears 8, 9 are rotatable about an axis of rotation of the sun gear 6. The planetary gear mechanism further includes a forward-drive clutch 11 and a reverse-drive brake 12. The forward-drive clutch 11 is provided to connect two rotary elements (more precisely, the sun gear 6 and the carrier 10) together so as to act as a unit, while the reverse-drive clutch 12 is provided to selectively fix the ring gear 7 to a stationary housing of the planetary gear mechanism, so that the direction of the input rotary motion is reversed.

The continuously variable transmission 1 is a belt-and-pulley type transmission, which includes, as well known in the art, a driving pulley 12 and a driven pulley 14 that are disposed in parallel with each other, and two hydraulic actuators 15, 16. Each of the driving and driven pulleys 12, 14 includes a stationary sheave not axially movable, and a movable sheave. axially movable by the corresponding hydraulic actuator 15, 16. The width of a groove defined by the stationary and movable sheaves of each pulley 13, 14 is variable by an axial movement of the movable sheave, so that the diameter (effective diameter) of each pulley 13, 14 at which a belt 17 connecting the driving and driven pulleys 13, 14 is held in contact with each pulley is continuously variable, whereby the speed ratio of the belt-and-pulley type transmission is continuously variable. The driving pulley 13 is connected to an output member in the form of the carrier 10 of the forward-reverse switching mechanism 2.

The hydraulic actuator 16 for the driven pulley 14 is operated with a pressurized fluid which is delivered from a hydraulic pump (not shown) and whose hydraulic pressure (line pressure or adjusted line pressure) is controlled according to the amount of torque received by the continuously variable transmission 1, by a hydraulic pressure control device (not shown). With the hydraulic pressure of the hydraulic actuator 16 being controlled, the belt 17 is tensioned while being squeezed by and between the sheaves of the driven pulley 14, whereby the tensioning force or pressure (contact pressure) of the belt 17 acting on the pulleys 13, 14 is adjusted. On the other hand, the hydraulic actuator 15 for the driving pulley 13 is operated with a pressurized fluid whose hydraulic pressure is controlled according to a desired or target speed ratio of the transmission 1, so that the width of the grooves (effective diameter) of the pulleys is adjusted so as to establish the target speed ratio.

The driven pulley 14 described above is connected to a differential 19 through a pair of gears 18, and the torque is transmitted from the differential 19 to drive wheels 20 (only one of .which is shown in Fig. 4). In the vehicle drive mechanism constructed as described above, a clutch device in the form of the lock-up clutch 3 and the continuously variable transmission 1 are disposed in series with each other between the engine 5 and the drive wheels 20.

For detecting the operating or running condition of the vehicle equipped with the drive mechanism including the continuously variable transmission 1 and the engine 5, there are provided various sensors, which include: a turbine speed sensor 21 generating an output signal indicative of a rotating speed of the turbine runner of the torque converter 4; an input speed sensor 22 generating an output signal indicative of a rotating speed of the driving pulley 13 of the continuously variable transmission 1; an output speed sensor 23 generating an output signal indicative of a rotating speed of the driven pulley 14; and a wheel speed sensor 24 generating an output signal indicative of a rotating speed of the drive wheels 20. The vehicle drive mechanism is further provided with other sensors (not shown) such as an accelerator sensor generating an output signal indicative of an amount of operation of an accelerator pedal, a throttle opening sensor generating an output signal indicative of an angle of opening of a throttle valve, and a brake sensor generating an output signal indicative of an operation of a brake pedal.

An electronic transmission control unit (CVT-ECU) 25 is provided for controlling the engaging and releasing actions of the forward-drive clutch 11 and the reverse-drive brake 12, the tension of the belt 17 and the speed ratio of the continuously variable transmission 1, and the lock-up clutch 3. This electronic transmission control unit 25 functions as a control apparatus arranged to control the continuously variable transmission 1 and the clutch device in the form of the lock-up clutch 3, according to the principle of the present invention. For example, this electronic transmission control unit 25 is principally constituted by a microcomputer operable to perform arithmetic operations on the basis of input data and stored data and according to predetermined programs, for controlling the operating state of the forward-reverse switching mechanism 2 so as to selectively establish its forward-drive, reverse-drive or neutral state, the operating state of the continuously variable transmission 1 so as to establish the desired belt tensioning force or pressure and speed ratio, and the operating state of the lock-up clutch 3 so as to selectively establish its fully engaged, fully released or slipping state and to control its slip speed.

Examples of the data (signals) received by the electronic transmission control unit 25 include output signals of speed sensors (not shown) indicative of an input speed Nin and an output speed Nout of the continuously variable transmission 1. The control unit 25 is arranged to further receive, from an electronic engine control unit (E/G-ECU) 26 for controlling the engine 5, signals indicative of an operating speed Ne and a load of the engine 5, and the above-indicated signals indicative of the angle of opening of the throttle valve and the amount of operation of the accelerator pedal. The continuously variable transmission 1 is selectively placed by a shifting device 27, in one of its operating positions such as a PARKING position, a REVERSE position, a NEUTRAL position, and driving positions including a DRIVE position. The electronic transmission control unit 25 is arranged to further receive a signal indicative of the operating position of the continuously variable transmission 1 presently selected by the shifting device 27.

The continuously variable transmission 1 is capable of controlling the engine speed as its input speed such that the engine speed is continuously variable. For instance, a target vehicle drive force is obtained on the basis of a required vehicle drive amount as represented by the operating amount of the accelerator pedal, and a running speed of the vehicle. Then, a target output of the engine 5 to provide the obtained target vehicle drive force is obtained on the basis of the target vehicle drive force and the vehicle running speed. The operating speed of the engine 5 to produce the obtained target output with a maximum fuel economy is obtained according to a predetermined data map, and the speed ratio of the continuously variable transmission 1 is controlled to establish the obtained engine speed.

The continuously variable transmission 1 is controlled to have a high degree of high power transmitting efficiency, while preventing deterioration of the fuel economy. Described in detail, the torque capacity of the continuously variable transmission 1, namely, the tent tensioning pressure is controlled so as to be as low as possible but sufficient to prevent slipping of the belt 17, and so as to be able to transmit a target torque determined by the torque of the engine 5. The continuously variable transmission 1 is controlled in this manner during a steady running state of the vehicle in which the vehicle speed and the required vehicle drive amount are held substantially unchanged, or during an almost steady running state of the vehicle in which the vehicle speed and the required vehicle drive amount are slightly changed.

When the torque acting on the vehicle drive mechanism including the continuously variable transmission 1 abruptly changes, for example, when the vehicle is abruptly braked or accelerated or when the vehicle runs on any matter lying on the road surface or a local stepped portion of the road surface, the torque capacity of the continuously variable transmission 1 tends to be relatively insufficient, causing a high risk of slipping of the belt 17, which may cause local wearing of the continuously variable transmission 1, leading to a damage of the transmission 1. In view this drawback, the control apparatus according to the present invention in the form of the electronic transmission control unit 25 is arranged to permit a slipping action of the lock-up clutch 3 disposed in series with the continuously variable transmission 1, for thereby reducing the torque acting on the continuously variable transmission 1 and accordingly preventing the slipping of the belt 17. There will be described a control operation performed by this control apparatus.

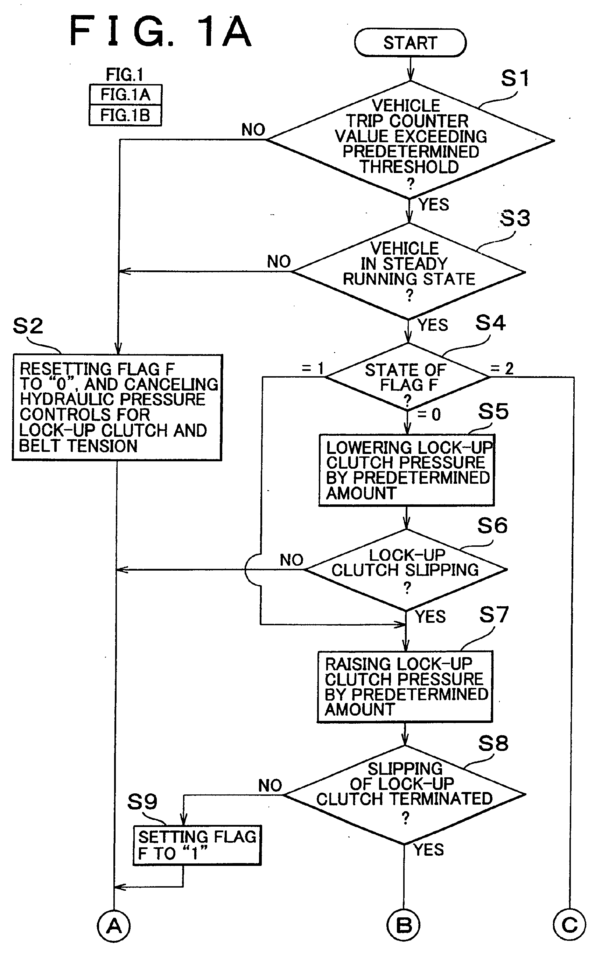

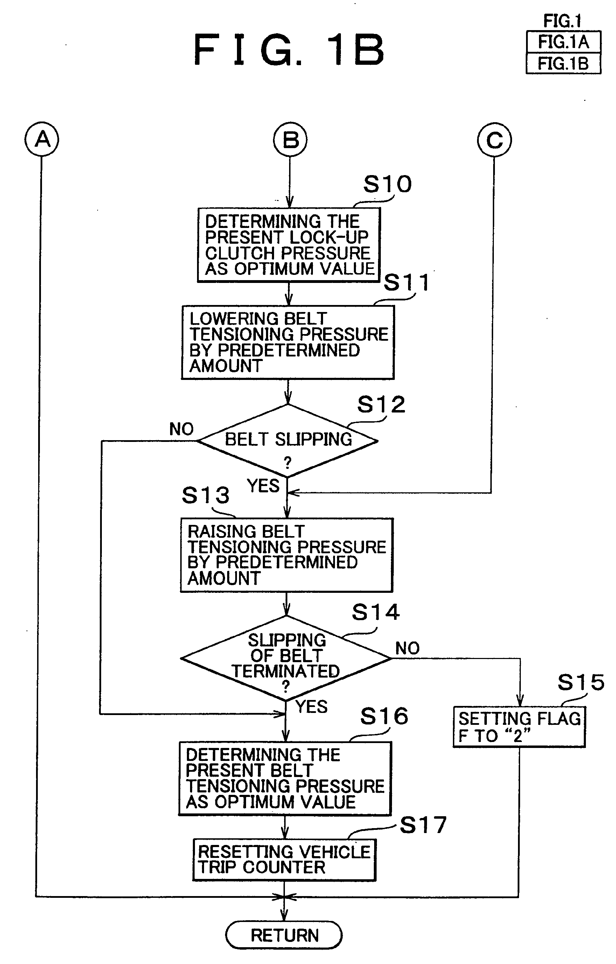

Referring to the flow chart of Fig. 1, there is illustrated one example of the control operation in which the belt tensioning pressure of the continuously variable transmission 1 (more precisely, the hydraulic pressure applied to the hydraulic actuator 16) is adjusted after the torque capacity of the lock-up clutch 3 (more precisely, the hydraulic pressure applied thereto) is adjusted in the steady running state of the vehicle. Initially, step S1 is implemented to determine whether the value of a vehicle trip counter has exceeded a predetermined threshold. This step is provided to determine whether a predetermined interval of adjustment of the torque capacities of the lock-up clutch 3 and the continuously variable transmission 1 has been reached. The determination in step S1 may be effected on the basis of the cumulative running distance of the vehicle or the cumulative number of runs of the vehicle after the last adjustment of the torque capacity.

Where the value of the vehicle trip counter after the last adjustment of the torque capacity has not exceeded the predetermined threshold, a negative decision (NO) is obtained in step S1, and the control flow goes to step S2 to reset a flag F and cancel predetermined hydraulic pressure controls for the lock-up clutch 3 and the belt tension. Then, the control flow returns to the start. The predetermined hydraulic pressure controls to be canceled in step S2 are performed such that the hydraulic pressures for the lock-up clutch 3 and the belt tension of the continuously variable transmission 1 are adjusted to levels as low as possible but sufficient to prevent slipping of the lock-up clutch 3 and the belt 17. Accordingly, these hydraulic pressure controls are cancelled.

Where the value of the vehicle trip counter has exceeded the predetermined threshold, an affirmative decision (YES) is obtained in step S1, and the control flow goes to step S3 to determine whether the vehicle is placed in the steady running state or not. The steady running state is a running state in which there is not a change in the behavior of the running vehicle. The determination in step S3 may be effected by determining whether at least one of the vehicle acceleration value and the engine load or operating amount of the accelerator pedal (at the present running speed of the vehicle) is held within a predetermined range, preferably, whether both of the vehicle acceleration value and the engine load (accelerator pedal operating amount) are placed within the respective predetermined ranges.

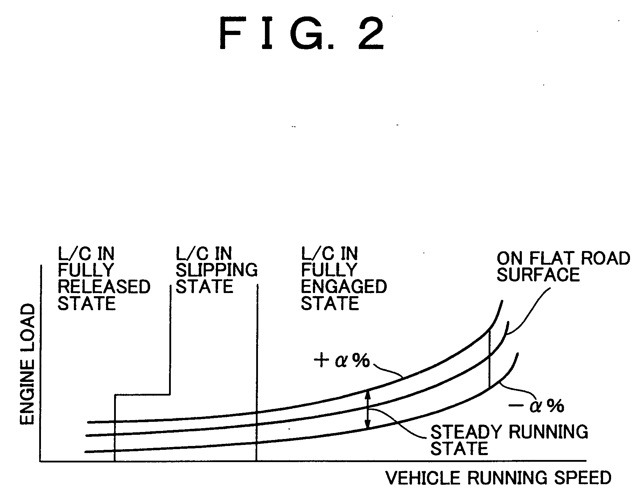

An example of the steady running state of the vehicle is illustrated in Fig. 2, wherein three lines represent respective relationships between the engine load and the vehicle running seed. The intermediate one of these three lines represents the relationship when the vehicle is running on a flat road surface whose gradient is 0%. The two other lines represent the relationships when the road surface has respective gradients of +α% and -α%. When a point defined by the present engine load and vehicle running speed is located within a steady state region defined by those two lines, the vehicle is considered to be in the steady running state. Preferably, it is determined that the vehicle is in the steady running state, when the above-indicated point is located within the above-indicated steady state region while the vehicle acceleration is in the predetermined range.

The value "α" of the road surface gradient is selected to be relatively small value, so that it is determined that the vehicle is in the steady running state when the vehicle is running on a flat or substantially flat road surface. Preferably, it is determined that the vehicle is in the steady running state when the vehicle is running on a flat or substantially flat road surface and when the vehicle acceleration is in the predetermined range.

Since the steady running state of the vehicle is a condition that must be satisfied when the torque capacities of the lock-up clutch 3 and the continuously variable transmission 1 are adjusted, as described below. In this respect, the lock-up clutch 3 must be in the fully engaged state in the steady running state of the vehicle. However, the lock-up clutch 3 may be placed in the fully released state or partially engaged state during a vehicle running at a relatively low running speed, for the purpose of preventing or reducing the booming noise of the vehicle. Therefore, the full engagement of the lock-up clutch 3 may be one of the conditions that must be satisfied to determine that the vehicle is in the steady running state. The flow chart of Fig. 1 may be modified to include a step of detecting the vehicle running speed for determining whether the vehicle is in the steady running state.

When the vehicle is not in the steady running state, a negative decision (NO) is obtained in step S3, and the control flow goes to the step S2 described above. When these hydraulic pressure controls are cancelled, normal hydraulic pressure controls are effected for the lock-up clutch 3 and the belt tension, such that the hydraulic pressures are controlled to be higher than the above-indicted levels, so that the engaging force of the lock-up clutch 3 and the belt tensioning force are adjusted to relatively large values inhibiting the slipping of the lock-up clutch 3 and the belt 17. When the vehicle is in the steady running stat and an affirmative decision (YES) is obtained in step S3, the control flow goes to step S4 to detect the state of the flag F. This flag is reset to "0" in step S2, as described above, where the torque capacities were not adjusted in the last control cycle, that is, before the predetermined interval of adjustment of the torque capacities of the lock-up clutch 3 and the continuously variable transmission 1 has not been reached. The flag F is set to "1" when a slipping action of the lock-up clutch 3 has been detected, and to "2" when a slipping action of the belt 17 of the continuously variable transmission 1 has been detected.

Therefore, the flag F is set at "0" when the value of the vehicle trip counter had not exceeded the predetermined threshold in the last control cycle. When the affirmative decision (YES) is obtained in step S3 while the flag F is set at "0", the control flow goes to step S5 in which the hydraulic pressure applied to the lock-up clutch 3 is lowered by a predetermined amount. Then, the control flow goes to step S6 to determine whether the lock-up clutch 3 is slipping (whether the lowering of the hydraulic pressure in step S5 has caused a slipping action of the lock-up clutch 3). This step S6 may be effected a suitable time after the reduction of the lock-up clutch pressure is commanded in step S5, since it takes some response time before a change of the lock-up clutch pressure appears. The slipping state of the lock-up clutch 3 may be detected on the basis of the engine speed Ne and the speed detected by the turbine speed sensor 21.

When the lock-up clutch 3 is not slipping and an affirmative decision (NO) is obtained in step S6, the control flow returns to the start. Namely, steps S1 and S3-S6 are implemented again, so that the hydraulic pressure of the lock-up clutch 3 is lowered again by the predetermined amount in step S5, and a determination as to whether the lock-up clutch 3 is slipping is made again in step S6. If the steady running state of the vehicle is lost in the meantime and the negative decision (NO) is obtained in step S3, the predetermined hydraulic pressure controls are cancelled in step S2.

As the hydraulic pressure applied to the lock-up clutch 3 is gradually lowered in the manner as described above, an affirmative decision (YES) is eventually obtained in step S6. In this state, the torque capacity of the lock-up clutch 3 is slightly smaller than the engine torque transmitted to the lock-up clutch 3. In this case, therefore, step S7 is implemented to raise the hydraulic pressure of the lock-up clutch 3 by a predetermined amount, so that the lock-up clutch 3 can transmit the received engine torque, without a slipping action thereof. The accuracy of control of the hydraulic pressure of the lock-up clutch 3 can be improved where the predetermined amount by which the hydraulic pressure is raised in step S7 is made smaller than the amount of lowering in step S5.

Then, the control flow goes to step S8 to determine whether the slipping action of the lock-up clutch 3 is terminated or eliminated. This step S8 may also be effected a suitable time after the rise of the lock-up clutch pressure is commanded in step S7, if it takes some response time before a change of the slipping state of the lock-up clutch 3 due to a change of its hydraulic pressure takes place. If the slipping action of the lock-up clutch 3 has not been eliminated, a negative decision (NO) is obtained in step S8, and the control flow goes to step S9 to set the flag F to "1". The control flow then returns to the start. In the next control cycle, therefore, it is determined in step S4 that the flag F is set at "1", and the control flow goes directly to step S7 to raise again the hydraulic pressure of the lock-up clutch 3 by the predetermined amount. If the steady running state of the vehicle is lost during repeated implementation of steps S1, S3, S4 and S7-S9, the control flow goes to the above-described step S2 to cancel the predetermined hydraulic pressure controls.

As the hydraulic pressure of the lock-up clutch 3 is gradually raised as described above, the slipping action of the lock-up clutch 3 is eventually terminated or eliminated, and an affirmative decision (YES) is obtained in step S8. In this case, the control flow goes to step S10 to determine the present hydraulic pressure of the lock-up clutch 3 as an optimum value. Namely, the torque capacity or the corresponding hydraulic pressure of the lock-up clutch 3 when the slipping action is eliminated is determined as the optimum torque capacity value or optimum hydraulic pressure value. The thus determined optimum torque capacity of the lock-up clutch 3 corresponds to the present output torque of the engine 5 or corresponds to a value slightly larger than the present engine output torque.

After the optimum torque capacity of the lock-up clutch 3 has been determined as described above, the hydraulic pressure corresponding to the torque capacity or the belt tensioning pressure of the continuously variable transmission 1 is adjusted. Described more specifically, the control flow goes to step S11 to lower the belt tensioning pressure (hydraulic pressure for establishing the belt tension) by a predetermined amount. For instance, this reduction of the belt tensioning pressure is effected according to a predetermined data map such that the torque capacity of the continuously variable transmission 1 is larger than that of the lock-up clutch 3. Then, the control flow goes to step S12 to determine whether the belt 17 is slipping (whether the lowering of the belt tensioning pressure in step S11 has caused a slipping action of the belt 17).

The above step S12 to check the belt 17 for its slipping action may also be effected a suitable time after the reduction of the belt tensioning clutch pressure is commanded in step S11, if it takes some response time before a change of the slipping state of the lock-up clutch 3 due to a change of its hydraulic pressure takes place. The term "slipping action" of the belt 17 used herein means a so-called macro-slip which is larger than a so-called "micro-slip" which is an extremely small amount of slipping of the belt 17 which inevitably occurs during an operation of the continuously variable transmission 1 to transmit the received torque. The slipping action of the belt 17 may be detected by comparison of the input and output speeds as detected by the respective input and output speed sensors 22, 23, or alternatively on the basis of a magnitude of oscillatory variation of the input speed, or a ratio of the thrust forces produced by the driving and driven actuators 15, 16.

Where an affirmative decision (YES) is obtained in step S12, that is, the reduction of the belt tensioning pressure has caused a slipping action of the belt 17, the control flow goes to step S13 to raise the hydraulic pressure establishing the belt tensioning pressure, by a predetermined amount. Then, step S14 is implemented to determine whether the slipping action of the belt 17 is terminated or eliminated.

If a negative decision (NO) is obtained in step S14 with the belt 17 being still held in the slipping state, the control flow goes to step S15 to set the flag F to "2", and returns to the start. In the next control cycle, therefore, it is determined in step S4 that the flag F is set at "2", and the control goes directly to step S13 to raise the tensioning pressure of the belt 17. The belt tensioning pressure is incremented in step S13 until the slipping action of the belt 17 is eliminated, namely, an affirmative decision (YES) is obtained in step S14. In the next step S16, the torque capacity or the corresponding hydraulic pressure of the continuously variable transmission 1 when the affirmative decision is obtained in step S14 is determined as the optimum torque capacity or optimum belt tensioning pressure of the transmission 1. Step S16 is followed by step S17 in which the vehicle trip counter described above with respect to step S1 is reset. Thus, the adjustments of the torque capacities (hydraulic pressures) of the lock-up clutch 3 and the continuously variable transmission 1 are terminated.

If the reduction of the belt tensioning pressure in step S11 has not caused a slipping action of the belt 17, that is, if a negative decision (NO) is obtained in step S12, the control flow goes directly to step S16 in which the present torque capacity or corresponding belt tensioning pressure is determined as the optimum value.

The belt tensioning pressure or torque capacity of the continuously variable transmission 1 thus determined in step S16 as the optimum value permits the transmission 1 to transmit the received engine torque without a slipping action of the belt 17. Thus, the control apparatus according to the first embodiment of Fig. 1 is arranged to be operable in the steady running state of the vehicle, to first adjust the torque capacity of the clutch device in the form of the lock-up clutch 3, and then adjust the torque capacity of the continuously variable transmission 1.

As described above, the control apparatus of the first embodiment is arranged to perform the control operation according to the flow chart of Fig. 1, such that the torque capacity of the lock-up clutch 3 disposed in series with the continuously variable transmission 1 is adjusted to a value as small as possible but sufficient to enable to the lock-up clutch 3 to transmit the received engine torque without a slipping action of the belt 17, and such that the torque capacity of the continuously variable transmission 1 is adjusted to be larger than the torque capacity of the lock-up clutch 3. Accordingly, the belt tensioning pressure of the continuously variable transmission 1 during a steady state running of the vehicle is minimized so as to maximize the power transmitting efficiency of the continuously variable transmission 1, for thereby improving the fuel economy of the vehicle. In other words, if a relatively large torque acts on the vehicle drive system including the continuously variable transmission 1, due to external disturbances such as slipping of the drive wheels 20, the continuously variable transmission 1 is effectively protected from an excessive amount of slipping and a wear resulting from the excessive slipping, owing to a slipping action of the lock-up clutch 3 which takes place before the slipping action of the continuously variable transmission 1.

When the torque acting on the vehicle drive mechanism is temporarily increased due to external disturbances caused by the road surface having a low friction coefficient or an extremely large amount of waviness (local raised and recessed areas), too, the prior slipping of the lock-up clutch 3 prevents an excessive amount of slipping of the belt 17 and the resulting damage or deteriorated durability of the continuously variable transmission 1. Further, the optimum torque capacities of the lock-up clutch 3 and the continuously variable transmission 1 are determined independently of each other, as described above, the torque capacities can be relatively easily and efficiently, without a risk of control hunting between the lock-up clutch 3 and the transmission 1.

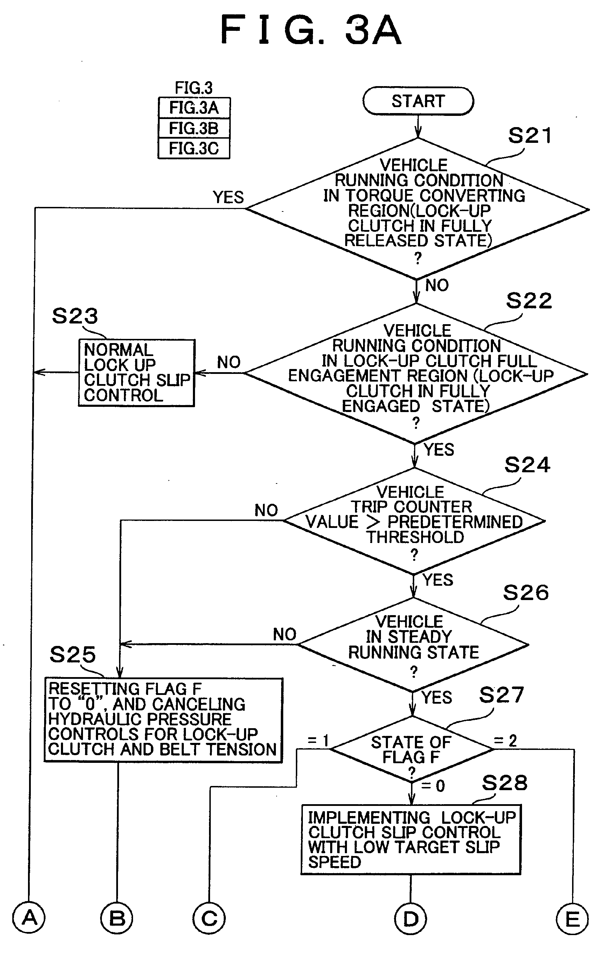

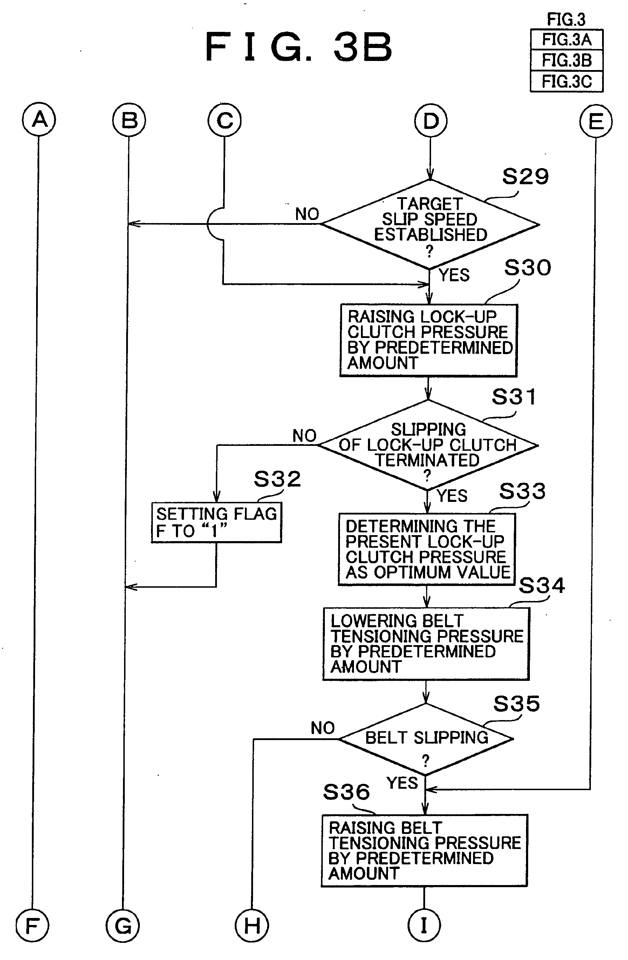

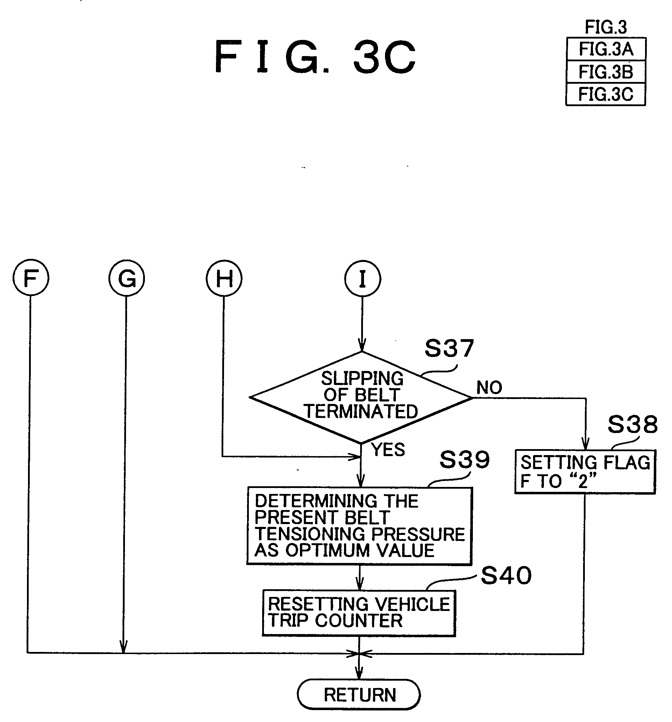

By the way, the lock-up clutch 3 is selectively placed in one of the fully engaged state, fully engaged state and slipping state, depending upon the running speed and other running condition of the vehicle, as described above. On the other hand, the control apparatus according to the embodiment described above is adapted to control or adjust the torque capacity of the lock-up clutch 3 placed in the fully engaged state. That is, the adjustment of the torque capacity of the lock-up clutch 3 must be effected while the vehicle is running with the lock-up clutch 3 held in the fully engaged state. However, since the slipping state of the lock-up clutch 3 can be controlled even while the vehicle running condition requires the fully engaged state of the lock-up clutch 3, this function of controlling the slipping state of the lock-up clutch 3 can be effectively utilized to adjust the torque capacity according to the second embodiment of the present invention, as illustrated in the flow chart of Fig. 3 by way of example.

According to the flow chart of Fig. 3, step S21 is initially implemented to determine whether the vehicle running condition requires the lock-up clutch 3 to be placed in the fully released state, that is, the vehicle running condition lies in a predetermined torque converting region in which the torque converter 4 is operable. The vehicle running conditions corresponding to the fully released, fully engaged and slipping states of the lock-up clutch 3 are indicated in Fig. 2 which have been referred to with respect to the steady running state of the vehicle. As indicated in Fig. 2, the fully released state of the lock-up clutch 3 corresponding to the torque converting region is established when the vehicle running speed is lower than a predetermined lower. Accordingly, the determination in step S21 may be effected depending upon whether the vehicle running speed is lower than the predetermined lower limit.

When the vehicle running speed is lower than the lower limit and requires the lock-up clutch 2 to be placed in the fully released state (torque converting state), an affirmative decision (YES) is obtained in step S21. In this case, the control flow returns to the start, without implementing any of the following steps, since the lock-up clutch 2 is placed in the fully engaged state.

When the vehicle running speed does not the lock-up clutch 3 to be placed in the torque converting state, on the other hand, a negative decision (NO) is obtained in step S21. In this case, the control flow goes to step S22 to determine whether the vehicle running condition requires the lock-up clutch 3 to be placed in the fully engaged state (requires the torque converter 4 to be placed in the lock-up state). As indicated in Fig. 2, the fully engaged state of the lock-up clutch 3 is established when the vehicle running speed is higher than a predetermined upper limit which cooperates with the above-indicated lower limit for the fully released state, to define a region of the slipping state of the lock-up clutch 3. If a negative decision (NO) is obtained in step S22, it indicates that the vehicle running condition requires the lock-up clutch 3 to be placed in the slipping state. In this case, the control flow goes to step S23 in which a normal slip control of the lock-up clutch 3 is implemented. In this normal slip control in step S23, the slipping state of the lock-up clutch 3 is controlled so as to establish a predetermined target slip speed, for example, a target slip speed of 50 r.p.m.

If the vehicle running condition requires the lock-up clutch 3 to be placed in the fully engaged state, an affirmative decision (YES) is obtained in step S22, and the control flow goes to step S24 to determine whether the value of the vehicle trip counter has exceeded the predetermined threshold. The determination in step S24 is effected as in step S1 of Fig. 1, to determine whether the predetermined interval of adjustment of the torque capacities of the lock-up clutch 3 and the continuously variable transmission 1 has been reached.

Where a negative decision (NO) is obtained in step S24, the control flow goes to step S25 to reset the flag F and cancel the predetermined hydraulic pressure controls for the lock-up clutch 3 and the belt tension, as in step S2 of Fig. 1 described above. Then, the control flow returns to the start. In the normal hydraulic pressure controls in step S25 similar to the step S2, the hydraulic pressures for the lock-up clutch 3 and the belt tension of the continuously variable transmission 1 are adjusted to be higher than in the predetermined hydraulic pressure controls.

Where an affirmative decision (YES) is obtained in step S24, the control flow goes to step S26 similar to step S3 of Fig. 1, to determine whether the vehicle is placed in the steady running state or not. The control flow goes to the above-indicated step S25 if a negative decision (NO) is obtained in step S26, and to step S27 to check the flag F for its state, if an affirmative decision (YES) is obtained in step S26.

As described above, the flag F is initially set at "0", so that the control flow goes to step S28 to implement a low-speed slip control of the lock-up clutch 3. In this low-speed control, the slipping state of the lock-up clutch 3 is controlled so as to establish a predetermined relatively low target slip speed, for example, a target slip speed of 5 r.p.m.

Step S28 is followed by step S29 to determine whether the actual slip speed of the lock-up clutch has become equal to the target slip speed. This step S29 may be effected a suitable time after the low-speed slip control is commanded in step S28, if it takes some response time before a change of the slip speed of the lock-up clutch 3 appears. When a negative decision (NO) is obtained in step S29, the control flow immediately returns to the start, and steps S21, S22, S24 and S26-S29 are implemented again. When an affirmative decision (YES) is obtained in step S29, on the other hand, the control flow goes to step S30 to raise the hydraulic pressure of the lock-up clutch 3 by a predetermined amount, as in step S7 described above with respect to the control apparatus according to the first embodiment of Fig. 1. The following steps S31-S40 are similar to steps S8-S17 of Fig. 1.

That is, the control flow goes to step S31 to determine whether the slipping action of the lock-up clutch 3 is terminated or eliminated. If the slipping action of the lock-up clutch 3 has not been eliminated, a negative decision (NO) is obtained in step S31, and the control flow goes to step S32 to set the flag F to "1". The control flow then returns to the start. if the slipping action of the lock-up clutch 3 has been eliminated, an affirmative decision (YES) is obtained in step S31. In this case, the control flow goes to step S33 to determine the present hydraulic pressure or the corresponding torque capacity of the lock-up clutch 3 as an optimum value.

Then, the torque capacity of the continuously variable transmission 1 is adjusted. Described more specifically, the control flow goes to step S34 to lower the hydraulic pressure establishing the belt tensioning pressure by a predetermined amount, and then to step S35 to determine whether the belt 17 is slipping. If an affirmative decision (YES) is obtained in step S35, the control flow goes to step S36 to raise the hydraulic pressure establishing the belt tensioning pressure, by a predetermined amount. Then, step S37 is implemented to determine whether the slipping action of the belt 17 is terminated or eliminated. If a negative decision (NO) is obtained in step S37 with the belt 17 being still held in the slipping state, the control flow goes to step S38 to set the flag F to "2", and returns to the start. The belt tensioning pressure is incremented in step S36 until the slipping action of the belt 17 is eliminated.

If an affirmative decision (YES) is obtained in step S37, the control flow goes to step S39 in which the torque capacity or the corresponding hydraulic pressure of the continuously variable transmission 1 when the affirmative decision is obtained in step S37 is determined as the optimum torque capacity or optimum belt tensioning pressure of the transmission 1. Step S39 is followed by step S40 in which the vehicle trip counter is reset.

If a negative decision (NO) is obtained in step S35, that is, if the reduction of the belt tensioning pressure in step S36 has not caused a slipping action of the belt 17, the control flow goes directly to step S39 in which the present hydraulic pressure of the lock-up clutch 3 is determined as the optimum value.

According to the control operation performed by the contr4ol apparatus of the second embodiment according to the flow chart of Fig. 3, the slipping state of the clutch device in the form of the lock-up clutch 3 is controlled by utilizing the function to control the lock-up clutch 3 in the slipping state while the vehicle running speed is relatively low. The present second embodiment permits easier and more efficient adjustment of the slipping state of the clutch device to thereby adjust its torque capacity (engaging pressure) to the optimum value, than the first embodiment of Fig. 1 which is adapted to gradually lower the belt tensioning pressure while monitoring whether a slipping action of the clutch device has taken place.

The second embodiment is similar to the first embodiment of Fig. 1 in that the torque capacities of the lock-up clutch 3 and the continuously variable transmission 1 are adjusted at the predetermined interval of adjustment, in that the adjustments of the torque capacities of the lock-up clutch 3 and the continuously variable transmission 1 are effected independently of each other, and in that the torque capacity of the continuously variable transmission 1 is adjusted after the torque capacity of the lock-up clutch 3 has been adjusted. In this respect, too, the second embodiment permits relatively easy and efficient adjustments of the torque capacities, and an improvement of the fuel economy of the vehicle, and effectively prevents a damage and deterioration of durability of the continuously variable transmission 1 even in the event of temporary application of a large torque to the vehicle drive mechanism.

It will be understood from the foregoing description of the first and second embodiments of this invention that a portion of the electronic transmission control unit (CVT-ECU) 25 assigned to implement the above-indicated steps S5-S10 and S28-S33 constitutes a clutch-torque-capacity adjusting portion, while a portion of the electronic transmission control unit 25 assigned to implement the steps S11-S16 and S34-S39 constitutes a transmission-torque-capacity adjusting portion. It will also be understood that a portion of the electronic transmission control unit 25 assigned to implement the steps S3 and S26 constitutes a vehicle-running-condition determining portion, while a portion of the electronic transmission control unit 25 assigned to implement the steps S1 and S24 constitutes an adjustment-interval detecting portion.

While the illustrated embodiments are arranged to control the continuously variable transmission of belt-and-pulley type, the principle of the present invention is equally applicable to any vehicle drive mechanism including a continuously variable transmission of any other types, such as a continuously variable transmission of toroidal or traction type. Further, the clutch device to be controlled according to the present invention may be any clutch device other than the lock-up clutch 3, such as a so-called "start clutch" provided in place of the torque converter 4, provided the clutch device is disposed in series with the continuously variable transmission, between the drive power source and the drive wheel.

While the invention has been described with reference to preferred embodiments thereof, it is to be understood that the present invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the sprint and scope of the invention.

A control apparatus for controlling a drive mechanism including a continuously variable transmission (1) and a clutch device (3) torque capacities of which are variable and which are disposed in series with each other between a drive power source (5) and drive wheel (20), the control apparatus including a clutch-torque-capacity adjusting portion (25, S5-S10, S28-S33) for adjusting the torque capacity of the clutch device such that the clutch device is capable of transmitting an output torque of the drive power source, without a slipping action of the clutch device, and a transmission-torque-capacity adjusting portion (25, S11-S16, S34-S39) for adjusting the torque capacity of the continuously variable transmission after the torque capacity of the clutch device has been adjusted by the clutch-torque-capacity adjusting portion, such that the continuously variable transmission is operable without a slipping action thereof. Also disclosed is a method of controlling the drive mechanism to adjust the torque capacities of the clutch device and the continuously variable transmission.

## Claims

1. A control apparatus for controlling a drive mechanism including a continuously variable transmission (1) and a clutch device (3) torque capacities of which are variable and which are disposed in series with each other between a drive power source (5) and drive wheel (20), said control apparatus being **characterized by** comprising:
a clutch-torque-capacity adjusting portion (25, S5-S10, S28-S33) for adjusting the torque capacity of said clutch device such that said clutch device is capable of transmitting an output torque of said drive power source, without a slipping action of said clutch device; and
a transmission-torque-capacity adjusting portion (25, S11-S16, S34-S39) for adjusting the torque capacity of said continuously variable transmission after the torque capacity of said clutch device has been adjusted by said clutch-torque-capacity adjusting portion, such that the continuously variable transmission is operable without a slipping action thereof.

2. A control apparatus according to claim 1, **characterized in that** said transmission-torque-capacity adjusting portion (25, S11-S16, S34-S39) adjusts the torque capacity of said continuously variable transmission such that the torque capacity of the continuously variable transmission is larger than that of said clutch device adjusted by said clutch-torque-capacity adjusting portion (25, S5-S10, S28-S33).

3. A control apparatus according to claim 1 or 2, **characterized in that** said clutch-torque-capacity adjusting portion (25, S5-S10) is operable during an operation of said drive power source (5) to generate a given amount of torque, said clutch-torque-capacity adjusting portion including a first portion (S5, S6) operable to reduce the torque capacity of said clutch device until a predetermined amount of slipping of said clutch device has taken place, and a second portion (S7-S10) operable to increase the torque capacity of the clutch device to a value which is larger by a predetermined amount than the torque capacity at which said predetermined amount of slipping has taken place.

4. A control apparatus according to claim 1 or 2, **characterized in that** said clutch-torque-capacity adjusting portion (25, S28-S33) includes a first portion (S28, S29) operable to adjust the torque capacity of said clutch device to a first value at which the clutch device has a predetermined amount of slipping, and a second portion (S30-S33) operable to increase the torque capacity of the clutch device to a second value which is larger by a predetermined amount than said first value.

5. A control apparatus according to any one of claims 1-4, **characterized by** further comprising a vehicle-running-condition determining portion (25, S3, S27) operable to determine a running condition of an automotive vehicle equipped with said drive mechanism, and wherein said clutch-torque-capacity adjusting portion (25, S4-S10, S28-S33) is operable to adjust the torque capacity of said clutch device when said vehicle-running-condition determining means determines that said automotive vehicle is running in a predetermined running condition.

6. A control apparatus according to claim 5, **characterized in that** said vehicle-running-condition determining portion determines that said automotive vehicle is running in said predetermined running condition, when said automotive vehicle is running at a substantially constant speed on a substantially flat road surface.

7. A control apparatus according to claim 6, **characterized in that** said vehicle-running-condition determining portion is operable to determine whether a point defined by a load acting on said drive power source (5) and a running speed of the automotive vehicle lies within a predetermined area in which the automotive vehicle is considered to be running in a steady state.

8. A control apparatus according to any one of claims 1-7, **characterized by** further comprising an adjustment-interval detecting portion (25, S1, S24) operable to determine whether a predetermined interval of adjustment of the torque capacities of said clutch device and said continuously variable transmission has been reached, and wherein said clutch-torque-capacity adjusting portion and said transmission-torque-capacity adjusting portions are operable to adjust the torque capacities of said clutch device and said continuously variable transmission, respectively, each time said adjustment-interval detecting portion has determined that said predetermined interval has been reached.

9. A method of controlling a drive mechanism including a continuously variable transmission (1) and a clutch device (3) torque capacities of which are variable and which are disposed in series with each other between a drive power source (5) and drive wheel (20), said method being **characterized by** comprising the steps of:
adjusting the torque capacity of said clutch device (3) such that said clutch device is capable of transmitting an output torque of said drive power source, without a slipping action of said clutch device; and
adjusting the torque capacity of said continuously variable transmission (1) after the torque capacity of said clutch device has been adjusted, such that the continuously variable transmission is operable without a slipping action thereof.

10. A control apparatus according to claim 9, **characterized in that** said step of adjusting the torque capacity of said continuously variable transmission comprises adjusting the torque capacity of said continuously variable transmission such that the torque capacity of the continuously variable transmission is larger than that of said clutch device.

11. A control apparatus according to claim 9 or 10, **characterized in that** said step of adjusting the torque capacity of said clutch device is effected during an operation of said drive power source (5) to generate a given amount of torque, and comprises reducing the torque capacity of said clutch device until a predetermined amount of slipping of said clutch device has taken place, and increasing the torque capacity of the clutch device to a value which is larger by a predetermined amount than the torque capacity at which said predetermined amount of slipping has taken place.

12. A control apparatus according to claim 9 or 10, **characterized in that** said step of adjusting the torque capacity of said clutch device comprises adjusting the torque capacity of said clutch device to a first value at which the clutch device has a predetermined amount of slipping, and increasing the torque capacity of the clutch device to a second value which is larger by a predetermined amount than said first value.

13. A control apparatus according to any one of claims 9-12, **characterized by** further comprising a step of determining a running condition of an automotive vehicle equipped with said drive mechanism, and wherein said step of adjusting the torque capacity of said clutch device comprises adjusting the torque capacity of said clutch device when it is determined that said automotive vehicle is running in a predetermined running condition.

14. A control apparatus according to claim 13, **characterized in that** said step of determining the running condition of the automotive vehicle comprises determining that said automotive vehicle is running in said predetermined running condition, when said automotive vehicle is running at a substantially constant speed on a substantially flat road surface.

15. A control apparatus according to claim 14, **characterized in that** said step of determining the running condition of the automotive vehicle comprises determining whether a point defined by a load acting on said drive power source (5) and a running speed of the automotive vehicle lies within a predetermined area in which the automotive vehicle is considered to be running in a steady state.

16. A control apparatus according to any one of claims 9-15, **characterized by** further comprising a step of determining whether a predetermined interval of adjustment of the torque capacities of said clutch device and said continuously variable transmission has been reached, and wherein said steps of adjusting the torque capacities of said clutch device and said continuously variable transmission comprise adjusting the torque capacities of said clutch device and said continuously variable transmission, respectively, each time it is determined that said predetermined interval has been reached.
